# EUROPÄISCHE PATENTANMELDUNG

(11) **EP 4 375 990 A2**
(43) Veröffentlichungstag der Anmeldung: **29.05.2024**
(21) Anmeldenummer: 23208247.9
(22) Anmeldetag: 07.11.2023
(51) Int. Cl.: G10L 17/00, H04R 25/00, G10L 17/04

(54) **VERFAHREN ZUM TRAINING EINER SPRECHERERKENNUNGSEINHEIT EINES HÖRGERÄTS SOWIE KOMBINATION AUS EINEM SOLCHEN HÖRGERÄT UND EINEM KOMMUNIKATIONSGERÄT**

(30) Priorität: 24.11.2022 DE 102022212578
(71) Anmelder: Sivantos Pte. Ltd., Singapore 539775 (SG)
(72) Erfinder: LÜKEN, Christoph, 91058 Erlangen (DE); MÜLLER-WEHLAU, Matthias, 91058 Erlangen (DE); HARLANDER, Niklas, 91058 Erlangen (DE)
(74) Vertreter: FDST Patentanwälte

(57) **Zusammenfassung**

Es wird ein Verfahren zum Training einer Sprechererkennungseinheit (2) eines Hörgeräts (4) eines Nutzers (N) beschrieben, wobei das Hörgerät (4) mit einem Kommunikationsgerät (6) des Nutzers (N) verbunden ist, zur Durchführung eines Ferngesprächs zwischen dem Nutzer (B) des Hörgeräts (4) und einem Gesprächspartner (G) des Nutzers (N), wobei ein Audiosignal (A1) des Gesprächspartners (G) von dem Kommunikationsgerät (6) empfangen wird, zur Ausgabe an den Nutzer (N), wobei dem Gesprächspartner (G) eine Sprecher-ID (10) zugeordnet wird, wobei aus dem Audiosignal (A1) eine Anzahl an Sprachsamples (12) des Gesprächspartners (G) extrahiert wird, wobei die Sprachsamples (12) der Sprecher-ID (10) zugeordnet werden und gemeinsam mit dieser einen Trainingsdatensatz (16) bilden, wobei die Sprechererkennungseinheit (2) des Hörgeräts (4) mit dem Trainingsdatensatz (16) trainiert wird, um zukünftig den Gesprächspartner (G) wiederzuerkennen. Weiter werden ein entsprechendes Hörgerät (4) und eine entsprechendes Kommunikationsgerät (6) beschrieben.

## Beschreibung

Die Erfindung betrifft ein Verfahren zum Training einer Sprechererkennungseinheit eines Hörgeräts sowie ein Hörgerät und ein Kommunikationsgerät, welche ausgebildet sind, in Kombination ein solches Verfahren ausführen.

Ein Hörgerät weist allgemein einen Eingangswandler, eine Signalverarbeitung und einen Ausgangswandler auf. Der Eingangswandler ist üblicherweise ein Mikrofon. Der Ausgangswandler ist üblicherweise ein Hörer, welcher auch als Lautsprecher oder Receiver bezeichnet wird. Ein Hörgerät ist regelmäßig einem einzelnen Nutzer zugeordnet und wird lediglich von diesem verwendet. Ein Hörgerät dient beispielsweise zur Versorgung eines hörgeschädigten Nutzers und zum Ausgleich eines Hörverlusts. Der Eingangswandler erzeugt ein Eingangssignal, welches der Signalverarbeitung zugeführt wird. Die Signalverarbeitung modifiziert das Eingangssignal und erzeugt dadurch ein Ausgangssignal, welches somit ein modifiziertes Eingangssignal ist. Zum Ausgleich eines Hörverlusts wird das Eingangssignal beispielsweise gemäß einem Audiogramm des Nutzers mit einem frequenzabhängigen Verstärkungsfaktor verstärkt. Das Ausgangssignal wird schließlich mittels des Ausgangswandlers an den Nutzer ausgegeben. Bei einem Hörgerät mit Mikrofon und Hörer erzeugt das Mikrofon entsprechend aus Schallsignalen in der Umgebung das Eingangssignal und der Hörer aus dem Ausgangssignal wieder ein Schallsignal. Bei dem Eingangssignal und dem Ausgangssignal handelt es sich um elektrische Signale, welche daher auch kurz jeweils als Signal bezeichnet werden. Die Schallsignale der Umgebung und das gegebenenfalls vom Hörer ausgegebene Schallsignal sind demgegenüber akustische Signale.

Eine Sprechererkennungseinheit dient zur Erkennung eines Sprechers ("speaker recognition"). Dies meint die konkrete Identifikation einer bestimmten Person und nicht die Erkennung der Präsenz eines Sprechers and sich ("speaker detection"), die Erkennung des Vorliegens von Sprache an sich ("speech detection") oder die Erkennung, was gesprochen wird ("speech recognition", d.h. Spracherkennung). Bei der Sprechererkennung wird ein Sprecher anhand von dessen Sprache identifiziert. Eine Sprechererkennung ist möglich, da jede Person eine individuelle Aussprache hat, sodass deren Sprache charakteristische Merkmale aufweist, mittels welcher die Sprache dieser Person von der Sprache einer anderen Person unterscheidbar ist.

Ein Problem bei der Sprechererkennung ist jedoch, dass diese trainiert werden muss, um überhaupt einen oder mehrere Sprecher erkennen zu können. Die charakteristischen Merkmale der Sprache derjenigen Sprecher, welche erkennbar sein sollen, müssen der Sprechererkennungseinheit beigebracht werden. Dies erfordert regelmäßig einen entsprechenden Aufwand, nämlich die Durchführung eines Trainings.

Vor diesem Hintergrund ist es eine Aufgabe der Erfindung, das Training einer Sprechererkennungseinheit zu verbessern, insbesondere zu vereinfachen. Die Sprechererkennungseinheit soll zudem in ein Hörgerät integriert sein, sodass dieses dann sprecherabhängig steuerbar ist. Das Training soll für einen Nutzer des Hörgeräts möglichst aufwandsarm sein. Zugleich soll die Sprechererkennungseinheit aber möglichst mit Blick auf den individuellen Bedarf des Nutzers trainiert werden, d.h. speziell solche Personen erkennen, welche tatsächlich mögliche Gesprächspartner des Nutzers sind.

Es wird verwiesen auf DE 10 2019 219 567 A1.

Die Aufgabe wird erfindungsgemäß gelöst durch ein Verfahren mit den Merkmalen gemäß Anspruch 1 sowie durch ein Hörgerät und ein Kommunikationsgerät gemäß Anspruch 11. Die Aufgabe wird insbesondere auch gelöst durch ein Hörgerät allein, welches ausgebildet ist zur Durchführung des Verfahrens. Vorteilhafte Ausgestaltungen, Weiterbildungen und Varianten sind Gegenstand der Unteransprüche. Die Ausführungen im Zusammenhang mit dem Verfahren gelten sinngemäß auch für das Hörgerät und das Kommunikationsgerät. Sofern nachfolgend explizit oder implizit Schritte des Verfahrens beschrieben sind, ergeben sich vorteilhafte Ausgestaltungen für das Hörgerät und das Kommunikationsgerät insbesondere dadurch, dass diese ausgebildet sind, einen oder mehrere dieser Schritte durchzuführen, wobei die Aufteilung der Schritte auf das Hörgerät und das Kommunikationsgerät zunächst grundsätzlich beliebig ist. Zur Durchführung eines oder mehrerer Schritte und des Verfahrens an sich weisen das Hörgerät und das Kommunikationsgerät jeweils insbesondere eine geeignete Steuereinheit auf.

Das Verfahren dient zum Training einer Sprechererkennungseinheit eines Hörgeräts eines Nutzers. Das Training erfolgt insbesondere im Betrieb des Hörgeräts, d.h. beim bestimmungsgemäßen Gebrauch durch den Nutzer des Hörgeräts. Das Training ist insofern auch ein Teil eines Verfahrens zum Betrieb des Hörgeräts.

Das Hörgerät ist mit einem (ersten) Kommunikationsgerät des Nutzers verbunden, zur Durchführung eines Ferngesprächs zwischen dem Nutzer des Hörgeräts und einem Gesprächspartner des Nutzers. Das Hörgerät und das Kommunikationsgerät sind beides insbesondere persönliche Geräte desselben Nutzers. Unter "Ferngespräch" wird insbesondere verstanden, dass Schallsignale des Gesprächspartners das Hörgerät und den Nutzer nicht direkt erreichen, sondern dass eine Umwandlung in ein Audiosignal (d.h. ein elektrisches Signal, welches Audiodaten enthält) zwecks Übertragung und eine anschließende Rückwandlung in ein Schallsignal für den Nutzer erforderlich sind. Die Übertragung erfolgt dabei regelmäßig über große Entfernungen. Das Ferngespräch ist beispielsweise ein Telefonat. Das Kommunikationsgerät ist geeigneterweise ein Telefon, z.B. ein Smartphone, oder allgemein ein Gerät mit Telefonfunktion. Auf Seiten des Gesprächspartners ist insbesondere ebenfalls ein (zweites) Kommunikationsgerät vorhanden, die Ausführungen zum Kommunikationsgerät des Nutzers gelten entsprechend. Die beiden Kommunikationsgeräte müssen dabei jedoch nicht zwingend gleichartig ausgebildet sein.

Vorzugsweise sind das Hörgerät und das erste Kommunikationsgerät zwei separate Geräte, welche auch unabhängig voneinander nutzbar und funktionsfähig sind. Geeignet ist aber auch eine Ausgestaltung, bei welcher das erste Kommunikationsgerät in das Hörgerät integriert ist.

Im Rahmen des Verfahrens (und konkret im Falle eines Ferngesprächs) wird in einem ersten Schritt ein Audiosignal des Gesprächspartners von dem Kommunikationsgerät empfangen, zur Ausgabe an den Nutzer. Das Ferngespräch wird demnach insbesondere dadurch realisiert, dass mit dem zweiten Kommunikationsgerät des Gesprächspartners ein Schallsignal, speziell mit Sprache des Gesprächspartners, aufgenommen wird und in ein Audiosignal umgewandelt wird, welches dann an das erste Kommunikationsgerät des Nutzers übertragen wird. Alternativ erhält das zweite Kommunikationsgerät direkt ein entsprechendes Audiosignal und die Umwandlung der Schallsignale des Gesprächspartners in ein solches Audiosignal erfolgt mit einem anderen Gerät, z.B. einem Headset oder einem Hörgerät. Auf Seiten des Nutzers erfolgt die Ausgabe des Audiosignals bevorzugterweise mittels des Hörgeräts, d.h. das erste Kommunikationsgerät übermittelt das Audiosignal an das Hörgerät und dieses wandelt das Audiosignal in ein Schallsignal um, zur Ausgabe an den Nutzer. Die vorgenannten Ausführungen gelten analog in umgekehrter Richtung, d.h. für die Übertragung eines Schallsignals mit Sprache des Nutzers an den Gesprächspartner; auf diesen Kanal kommt es vorliegend jedoch nicht unbedingt an. Auch auf die Details der Umwandlung und Übertragung kommt es vorliegend nicht an. Unter "Audiosignal" wird allgemein ein elektrisches Signal verstanden, welches Audiodaten enthält. Das Audiosignal wird zu dem ersten Kommunikationsgerät beispielsweise über ein Telekommunikationsnetzwerk übertragen, z.B. Festnetz, Mobilfunknetz, Internet oder dergleichen oder eine Kombination hiervon. Vorzugsweise wird dann das Audiosignal vom ersten Kommunikationsgerät an das Hörgerät übertragen und von diesem ausgegeben, insbesondere als Schallsignal. Die Übertragung des Audiosignals vom Kommunikationsgerät des Nutzers zum Hörgerät erfolgt insbesondere drahtlos, bevorzugterweise über eine Bluetooth-Verbindung oder alternativ über eine andere Funkverbindung. Zusätzlich wird in einem zweiten Schritt dem Gesprächspartner eine Sprecher-ID zugeordnet. Mit anderen Worten: der Gesprächspartner wird identifiziert, womit aber nicht gemeint ist, dass der Gesprächspartner anhand der Sprachsamples identifiziert wird, wie dies durch die Sprechererkennungseinheit regelmäßig im Betrieb erfolgt, sondern dass der Gesprächspartner tatsächlich und auf anderem Wege als durch die Sprachsamples identifiziert wird. Diese Zuordnung der Sprecher-ID zu dem Gesprächspartner erfolgt insbesondere ebenfalls nur im Falle eines Ferngesprächs. Die Sprecher-ID ist beispielsweise einfach ein Name des Gesprächspartners, ebenfalls geeignet ist aber auch ein Pseudonym oder eine einfache Zahl oder Zeichenkette. Die Sprecher-ID ist dem Gesprächspartner insbesondere eindeutig zugeordnet.

Aus dem Audiosignal wird in einem dritten Schritt eine Anzahl an Sprachsamples des Gesprächspartners extrahiert. Unter "eine Anzahl" wird allgemein "wenigstens ein" verstanden. Typischerweise werden mehrere Sprachsamples extrahiert. Die genannte Extraktion erfolgt insbesondere ebenfalls nur im Falle eines Ferngesprächs, da nur dann ein entsprechendes Audiosignal vorliegt. Die Sprachsamples werden beispielsweise extrahiert, indem zunächst im Audiosignal mittels einer Spracherkennungseinheit solche Signalabschnitte erkannt werden, welche Sprache enthalten, und indem anschließend diese Signalabschnitte als Sprachsamples gespeichert werden. Die Sprachsamples werden dann noch der Sprecher-ID zugeordnet und bilden gemeinsam mit dieser einen Trainingsdatensatz.

Mit diesem Trainingsdatensatz wird nun in einem vierten Schritt die Sprechererkennungseinheit des Hörgeräts trainiert, um zukünftig den Gesprächspartner wiederzuerkennen, insbesondere während des bestimmungsgemäßen Gebrauchs des Hörgeräts. Die auf diese Weise trainierte Sprechererkennungseinheit ist nun ausgebildet, den Gesprächspartner zu erkennen, und zwar vorteilhafterweise sowohl in einem erneuten Ferngespräch als auch außerhalb eines solchen, insbesondere in einer echten Gesprächsumgebung, bei welcher der Gesprächspartner in der Nähe des Nutzers ist und die Sprache des Gesprächspartners den Nutzer nicht über das Kommunikationsgerät erreicht, sondern direkt mit dem Hörgerät aufgenommen und wiedergegeben wird. Eine solche echte Gesprächsumgebung ergibt sich z.B. bei einem Gespräch von Angesicht zu Angesicht. Der Gesprächspartner, mit dessen Sprachsamples und Sprecher-ID die Sprechererkennungseinheit wie beschrieben trainiert wurde, ist dann ein antrainierter Gesprächspartner, auch als bekannter oder erkennbarer Gesprächspartner bezeichnet.

Kern der hier vorgestellten Erfindung sind insbesondere die beschriebene Extraktion von Sprachsamples aus einem Audiosignal eines Ferngesprächs und die Bildung eines Trainingsdatensatzes damit sowie die Nutzung dieses Trainingsdatensatzes zum Training der Sprechererkennungseinheit. Von untergeordneter Bedeutung - und daher hier auch nicht weiter beschrieben - sind hingegen die Details des Trainings selbst und die dabei vorgenommene Verarbeitung der Sprachsamples. So kann das Training alleinig vom Hörgerät oder alleinig vom Kommunikationsgerät durchgeführt werden oder auf beide verteilt sein. Beispielsweise ist auf dem Kommunikationsgerät eine Software installiert, welche die Sprachsamples analysiert und dann als Ergebnis davon einen einfachen Parametersatz, Merkmalssatz oder ein Modell erstellt, welcher/welches an die Sprechererkennungseinheit übertragen wird, sodass diese dann entsprechend trainiert ist und somit zukünftig den Gesprächspartner erkennen kann. Ebenfalls von untergeordneter Bedeutung ist die tatsächliche Sprechererkennung im Betrieb des Hörgeräts, d.h. wie die Sprechererkennungseinheit ein Audiosignal analysiert und anhand dessen den Gesprächspartner erkennt (z.B. mittels GMM, HMM, DNN etc.).

Das Hörgerät weist allgemein insbesondere einen Eingangswandler, eine Signalverarbeitung und einen Ausgangswandler auf. Der Eingangswandler ist vorzugsweise ein Mikrofon. Der Ausgangswandler ist vorzugsweise ein Hörer, welcher auch als Lautsprecher oder Receiver bezeichnet wird. Das Hörgerät ist regelmäßig einem einzelnen Nutzer zugeordnet und wird lediglich von diesem verwendet. Das Hörgerät ist insbesondere individuell auf den Nutzer abgestimmt. Das Hörgerät dient insbesondere zum Ausgleich eines Hörverlusts des Nutzers, d.h. zur Versorgung eines hörgeschädigten Nutzers. Der Eingangswandler erzeugt ein Eingangssignal, welches der Signalverarbeitung zugeführt wird. Die Signalverarbeitung modifiziert das Eingangssignal und erzeugt dadurch ein Ausgangssignal, welches somit ein modifiziertes Eingangssignal ist. Zum Ausgleich eines Hörverlusts wird das Eingangssignal beispielsweise gemäß einem Audiogramm des Nutzers mit einem frequenzabhängigen Verstärkungsfaktor verstärkt. Das Ausgangssignal wird schließlich mittels des Ausgangswandlers an den Nutzer ausgegeben. Bei einem Hörgerät mit Mikrofon und Hörer, wovon vorliegend ohne Beschränkung der Allgemeinheit ausgegangen wird, erzeugt das Mikrofon entsprechend aus Schallsignalen in der Umgebung das Eingangssignal und der Hörer aus dem Ausgangssignal wieder ein Schallsignal. Bei dem Eingangssignal und dem Ausgangssignal handelt es sich um Audiosignale, d.h. elektrische Signale. Die Schallsignale der Umgebung und das gegebenenfalls vom Hörer ausgegebene Schallsignal sind demgegenüber akustische Signale.

Die Sprechererkennungseinheit dient zur Erkennung eines Sprechers (auch als "speaker recognition" bezeichnet), vorliegend insbesondere zur Wiedererkennung eines Gesprächspartners des Nutzers. Dabei geht es um die konkrete Identifikation einer bestimmten Person und nicht um die Erkennung der Präsenz eines Sprechers and sich ("speaker detection"), die Erkennung des Vorliegens von Sprache an sich ("speech detection") oder die Erkennung, was gesprochen wird ("speech recognition", d.h. Spracherkennung). Bei der Sprechererkennung wird ein Sprecher anhand von dessen Sprache identifiziert. Dabei meint der Begriff "Sprache" diejenigen Schallsignale, welche von einer Person beim Sprechen ausgegeben werden. Eine Sprechererkennung ist möglich, da jede Person eine individuelle Aussprache hat, sodass deren Sprache charakteristische Merkmale aufweist, mittels welcher die Sprache dieser Person von der Sprache einer anderen Person unterscheidbar ist. Eine solche Prüfung und Unterscheidung mit dem Ergebnis einer Erkennung eines bestimmten Sprechers erfolgt vorliegend mit der Sprechererkennungseinheit. Diese weist hierzu insbesondere einen Klassifikator auf, welcher ein gegebenes Audiosignal nach bestimmten Merkmalen (Lautstärke, Frequenzanteile, Timing, etc.) absucht, welche die Sprache eines jeweiligen Gesprächspartners charakterisieren. Sind die Merkmale der Sprache eines antrainierten Gesprächspartners im Audiosignal enthalten, wird dieser Gesprächspartner erkannt. Wie der Gesprächspartner dann bezeichnet wird, ist grundsätzlich beliebig, wichtig ist zunächst nur, dass erkannt wird, dass ein bestimmter Gesprächspartner spricht, sodass anhängig hiervon geeignete Maßnahmen ergriffen werden können. Solche Maßnahmen sind insbesondere eine optimierte Einstellung des Hörgeräts oder speziell eine Anpassung der Modifikation des Eingangssignals durch die Signalverarbeitung, z.B. um den Gesprächspartner für den Nutzer besser hörbar zu machen.

Ein wesentlicher Vorteil der Erfindung ist insbesondere, dass das Training für die Sprechererkennungseinheit kein aktives Eingreifen des Nutzers erfordert, sondern rein passiv erfolgt. Dem liegt die Überlegung zugrunde, dass ein Training für eine Sprechererkennungseinheit typischerweise eine aktive Lernphase erfordert, welche aktiv vom Nutzer aktiviert werden muss und während welcher der zukünftig zu erkennende Gesprächspartner kooperieren muss, um eine vorgeschriebene Prozedur für das Training abzuarbeiten. Ein spezielles Problem bei Hörgeräten ist, dass oftmals nicht ausreichend viele Sprachsamples eines möglichen, individuellen Gesprächspartners des Nutzers verfügbar sind. Diese Probleme werden vorliegend durch die beschriebene Extraktion von Sprachsamples während eines Ferngesprächs gelöst. Diese Extraktion erfolgt zudem vorteilhaft vollständig passiv, eine spezielle Aktion oder Kooperation des Gesprächspartners oder des Nutzers und auch eine spezielle Umgebung und Prozedur für das Training sind nicht erforderlich. Die Sprechererkennungseinheit wird vorliegend vielmehr vorteilhaft im regulären Betrieb des Hörgeräts automatisch trainiert, sozusagen im Hintergrund.

Für das Training der Sprechererkennungseinheit ist die Zuordnung des Gesprächspartners zu den Sprachsamples von Bedeutung, da dies die zukünftige Erkennung des Gesprächspartners anhand von dessen Sprache überhaupt erst ermöglicht. Vorliegend wird hierzu die Sprecher-ID verwendet. Wenn dann zukünftig ein Audiosignal von der Sprechererkennungseinheit analysiert wird, wird von dieser entsprechend die zugehörige Sprecher-ID - sofern vorhanden - zurückgegeben. Diese wird dann z.B. dem Nutzer einfach angezeigt und/oder für diese Sprecher-ID ist eine bestimmte Konfiguration des Hörgeräts gespeichert, welche dann eingestellt wird.

Vorliegend wird zur Bestimmung der Sprecher-ID ausgenutzt, dass bei einem Ferngespräch typischerweise bereits eine Sprecher-ID für den Gesprächspartner vorhanden ist, welche zunächst einmal genutzt wird, um das Ferngespräch überhaupt herzustellen. Die Sprecher-ID wird entsprechend mittels eines Kontaktverzeichnisses bestimmt, in welchem für eine Anzahl an möglichen Gesprächspartnern jeweils eine Sprecher-ID und eine Kontaktinformation zur Herstellung eines Ferngesprächs gespeichert sind. Auf diese Weise wird der Gesprächspartner tatsächlich und auf anderem Wege als durch die Sprachsamples identifiziert. Die Kombination aus Sprecher-ID und Kontaktinformation wird auch als Kontakt oder Kontakteintrag bezeichnet. In einer bevorzugten Ausgestaltung ist das Kontaktverzeichnis ein Telefonbuch, welches insbesondere auf dem Kommunikationsgerät gespeichert ist. Mit dem Kontaktverzeichnis ist es dem Nutzer möglich, einen Gesprächspartner auszuwählen und mit diesem ein Ferngespräch herzustellen (oder umgekehrt wird der Nutzer vom Gesprächspartner kontaktiert). Entsprechend ist dann für dieses Ferngespräch der Gesprächspartner automatisch bekannt und anhand der Sprecher-ID auch eindeutig identifizierbar. Daher wird diese Sprecher-ID dann vorteilhafterweise den Sprachsamples zugeordnet, welche während des Ferngesprächs extrahiert werden. Auf diese Weise wird den Sprachsamples automatisch der tatsächliche und korrekte Gesprächspartner zugeordnet. Falls der Gesprächspartner nicht bekannt ist, also nicht im Kotaktverzeichnis gespeichert ist, erfolgt konsequenterweise auch kein Training. Alternativ wird in diesem Fall der Nutzer aufgefordert eine Sprecher-ID einzugeben, welche dann den Sprachsamples zugeordnet wird, oder es wird ein Pseudonym, eine Zufalls-ID oder ähnliches als Sprecher-ID verwendet.

Die vorliegende Erfindung nutzt demnach die Kenntnis des Gesprächspartners und dessen Sprecher-ID im speziellen Fall eines Ferngesprächs, um den Sprachsamples die korrekte Sprecher-ID zuzuordnen. Eine Identifikation des Gesprächspartners mittels der Sprechererkennungseinheit erfolgt hierbei nicht zwangsläufig, dies ist etwas anderes. Kern der vorliegenden Erfindung ist die Erzeugung von Trainingsdatensätzen mit sicher korrekter Zuordnung von Sprecher-ID und Sprachsamples. Dies steht dann auch im Gegensatz zur eingangs genannten DE 10 2019 219 567 A1. Dort wird jedenfalls eine Sprecher-ID, welche den extrahierten Sprachsamples zugeordnet wird, nicht einem Kontaktverzeichnis entnommen wird.

Zweckmäßig ist auch ein selektives Training nur für bestimmte Gesprächspartner, insbesondere solche, welche vom Nutzer vorab ausgewählt werden. In einer geeigneten Ausgestaltung hierfür ist eine Liste (sozusagen ein Trainingsplan) bereitgestellt, welche eine Anzahl von Sprecher-IDs enthält, für welche die Sprechererkennungseinheit trainiert werden soll. Die Liste unterscheidet sich insbesondere von dem bereits genannten Kontaktverzeichnis. Beispielsweise sind im Kontaktverzeichnis einzelne Gesprächspartner und/oder Gruppen von Gesprächspartnern auswählbar, für welche die Sprechererkennungseinheit trainiert werden soll und welche dann die Liste bilden, sozusagen als Teilmenge des Kontaktverzeichnisses. Die Sprechererkennungseinheit wird nun lediglich dann trainiert, wenn die Sprecher-ID des Gesprächspartners im (aktuellen) Ferngespräch in der Liste enthalten ist. Auf diese Weise erfolgt ein Training nur für vorselektierte Personen und/oder Gruppen. Optional werden auch gar nicht erst Sprachsamples extrahiert und/oder ein Trainingsdatensatz erzeugt, wenn die Sprecher-ID nicht in der Liste enthalten ist. Die Liste ist z.B. auf dem Hörgerät oder dem Kommunikationsgerät gespeichert. Die Liste kann auch in das Kontaktverzeichnis integriert sein.

Die Qualität der Sprachsamples ist bei heutigen Technologien für Ferngespräche typischerweise ausreichend für ein erfolgreiches Training der Sprechererkennungseinheit. Nichtsdestoweniger ist es zweckmäßig, die Qualität der Sprachsamples zu bestimmen und gegebenenfalls solche Sprachsamples, welche hinsichtlich der Qualität eine Mindestanforderung nicht erfüllen, zu verwerfen, d.h. nicht zum Training der Sprechererkennungseinheit zu verwenden. In einer geeigneten Ausgestaltung hierfür wird ein Qualitätsparameter (d.h. allgemein die Qualität) des Ferngesprächs bestimmt und somit insbesondere automatisch auch die Qualität möglicher Sprachsamples, welche extrahierbar sind. Die Sprechererkennungseinheit wird nun lediglich dann trainiert, wenn der Qualitätsparameter einen vorgegebenen Grenzwert überschreitet (je nach Ausgestaltung nach oben oder nach unten). Auch hier gilt, dass optional auch gar nicht erst Sprachsamples extrahiert und/oder ein Trainingsdatensatz erzeugt werden, wenn der Qualitätsparameter den Grenzwert nicht überschreitet. Der Qualitätsparameter ist beispielsweise eine Bandbreite des Audiosignals, welches vom Gesprächspartner (speziell dessen Kommunikationsgerät) zum Kommunikationsgerät des Nutzers übertragen wird. Alternativ ist der Qualitätsparameter eine Verbindungsqualität der Verbindung zwischen den beiden Kommunikationsgeräten für das Ferngespräch. Möglich ist auch, dass zuerst die Sprachsamples extrahiert werden und dann anhand dieser der Qualitätsparameter bestimmt wird, gegebenenfalls sogar separat für jedes einzelne Sprachsample.

Vorzugsweise weist das Hörgerät ein Mikrofon auf und ist ausgebildet, den Gesprächspartner auch dann wiederzuerkennen, wenn dessen Sprache direkt von dem Mikrofon aufgenommen wird, d.h. insbesondere bei einem Gespräch von Angesicht zu Angesicht im Gegensatz zu einem Ferngespräch. Ein Schallsignal, welches Sprache des Gesprächspartners enthält, wird vom Mikrofon aufgenommen und in ein Eingangssignal umgewandelt. Das Eingangssignal des Mikrofons ist ein Audiosignal, welches wie das Audiosignal beim Ferngespräch einer Analyse durch die Sprechererkennungseinheit zugänglich ist. Entsprechend wird das Eingangssignal der Sprechererkennungseinheit zugeführt und von dieser analysiert. Sofern der aktuelle Gesprächspartner einem antrainierten Gesprächspartner entspricht, wird dieser von der Sprechererkennungseinheit auch erkannt. Das Eingangssignal wird insbesondere auch wie bereits beschrieben der Signalverarbeitungseinheit zugeführt, um ein Ausgangssignal zu erzeugen.

Für das Ferngespräch ist das Hörgerät zweckmäßigerweise ausgebildet, als Headset verwendet zu werden, d.h. als akustisches Ein- und Ausgabegerät für das Kommunikationsgerät des Nutzers. In einer geeigneten Ausgestaltung hierfür weist das Hörgerät einen Headset-Modus auf, in welchem das Hörgerät als ein- und Ausgabegerät für Schallsignale verwendet wird, welche vom Hörgerät in Form von Audiosignalen über das Kommunikationsgerät mit dem Gesprächspartner ausgetauscht (d.h. gesendet und/oder empfangen) werden. Der Headset-Modus wird insbesondere während eines Ferngesprächs aktiviert. Das Kommunikationsgerät des Nutzers dient hierbei insbesondere als Relay für die Weiterleitung von Audiosignalen zwischen dem Hörgerät des Nutzers und dem Kommunikationsgerät des Gesprächspartners. Damit ist dann insgesamt ein Headset-Modus-basiertes Training zur Sprechererkennung realisiert.

Das Hörgerät allgemein und speziell insbesondere die Erzeugung des Ausgangssignals mittels der Signalverarbeitungseinheit werden zweckmäßigerweise sprecherabhängig gesteuert, d.h. abhängig von der Sprecher-ID des aufgrund des vorangegangenen Trainings in einer nun echten Gesprächsumgebung erkannten Gesprächspartners. Nachfolgend sind einige geeignete Ausgestaltungen für eine solche sprecherabhängige Anpassung des Betriebs des Hörgeräts beim Wiedererkennen des Gesprächspartners mittels der Sprechererkennungseinheit beschrieben. Dabei wird vorausgesetzt, dass das Wiedererkennen in einer echten Gesprächsumgebung erfolgt, d.h. die Sprache des Gesprächspartners erreicht das Hörgerät direkt als Schallsignal und nicht über den Umweg eines Kommunikationsgeräts und in Form eines Audiosignals, auch wenn dies grundsätzlich möglich ist. Die genannten Ausgestaltungen sind auch miteinander kombinierbar.

In einer ersten Ausgestaltung wird beim Wiedererkennen des Gesprächspartners mittels der Sprechererkennungseinheit der Betrieb des Hörgeräts sprecherabhängig angepasst, indem eine Hörrichtung des Hörgeräts auf den Gesprächspartner gerichtet, insbesondere fokussiert, wird. Das Hörgerät wird hierbei insbesondere in einem Betriebsmodus "Richtungshören" betrieben, für welchen das Mikrofon als Richtmikrofon ausgebildet ist, um Schallsignale aus einer bestimmten Richtung gegenüber Schallsignalen aus anderen Richtungen hervorzuheben. Diese bestimmte Richtung wird durch eine Richtcharakteristik des Mikrofons bestimmt, welche nun derart eingestellt wird, dass diese den erkannten Gesprächspartner gegenüber anderen Schallquellen in der Umgebung hervorhebt.

In einer zweiten Ausgestaltung wird beim Wiedererkennen des Gesprächspartners mittels der Sprechererkennungseinheit der Betrieb des Hörgeräts sprecherabhängig angepasst, indem ein dem Gesprächspartner zugeordnetes Sound-Profil oder Betriebsprogramm des Hörgeräts eingestellt wird. Der Betrieb des Hörgeräts, insbesondere eine Verarbeitung des Eingangssignals mittels der Signalverarbeitungseinheit, wird dadurch speziell auf den Gesprächspartner angepasst. Beispielsweise spricht der Gesprächspartner regelmäßig besonders leise und es ist dann ein Sound-Profil hinterlegt, mit welchem die Signalverarbeitungseinheit einen größeren Verstärkungsfaktor verwendet, als durch das Audiogram vorgegeben ist. Denkbar ist auch, dass für einen bestimmten Gesprächspartner der Headset-Modus aktiviert wird, falls dieser ebenfalls ein Hörgerät aufweist, welches ebenfalls in einen Headset-Modus geschaltet wird, um dann direkt mittels Audiosignales zu kommunizieren.

In einer dritten Ausgestaltung wird beim Wiedererkennen des Gesprächspartners mittels der Sprechererkennungseinheit der Betrieb des Hörgeräts sprecherabhängig angepasst, indem eine Medienwiedergabe unterbrochen wird, welche über das Hörgerät erfolgt. Voraussetzung hierfür ist, dass zu diesem Zeitpunkt eine Medienwiedergabe überhaupt aktiv ist. Ähnlich zum Headset-Modus ist das Hörgerät auch als bloßes Audioausgabegerät in einem Medienwiedergabemodus betreibbar. Falls dieser aktiv ist und der Gesprächspartner erkannt wird, wird der Medienwiedergabemodus unterbrochen, damit der Nutzer den Gesprächspartner besser verstehen kann. Dies ist besonders sinnvoll in Kombination mit der oben erwähnten Liste an Gesprächspartnern, für welche überhaupt die Sprechererkennungseinheit aktiviert wird, sodass dann auch speziell nur für diese - möglicherweise besonders relevanten - Gesprächspartner die Medienwiedergabe unterbrochen wird.

In einer vierten Ausgestaltung wird beim Wiedererkennen des Gesprächspartners mittels der Sprechererkennungseinheit der Betrieb des Hörgeräts sprecherabhängig angepasst, indem ein Lautlosbetrieb des Hörgeräts deaktiviert wird. Voraussetzung hierfür ist, dass der Lautlosbetrieb zu diesem Zeitpunkt überhaupt aktiv ist. Im Lautlosbetrieb ist z.B. eine Umgebungsgeräuschunterdrückung oder Rauschunterdrückung aktiviert. Im Grunde gelten hierfür die Ausführungen und Vorteile zur dritten Ausgestaltung oben analog.

In einer fünften Ausgestaltung wird beim Wiedererkennen des Gesprächspartners mittels der Sprechererkennungseinheit der Betrieb des Hörgeräts sprecherabhängig angepasst, indem eine Vorverarbeitungseinheit, insbesondere zur Spracherkennung (d.h. "speech recognition"), des Hörgeräts aktiviert wird. Die Vorverarbeitungseinheit realisiert eine optionale Vorverarbeitung des Eingangssignals vom Mikrofon, insbesondere bevor das Eingangssignal weiterverarbeitet wird. Beispielsweise weist das Hörgerät eine Spracherkennungseinheit auf, mittels welcher insbesondere parallel und grundsätzlich unabhängig von der Signalverarbeitung Sprache erkannt wird. Hierfür ist eine Vorverarbeitung vor der Spracherkennungseinheit vorteilhaft, z.B. um Sprachanteile gezielt zu isolieren. Dies erfolgt mittels der Vorverarbeitungseinheit, deren Aktivierung jedoch nur dann erforderlich ist, wenn auch tatsächlich Sprache oder spezieller Sprache, welche auch erkannt werden soll, vorhanden ist.

Nachfolgend werden Ausführungsbeispiele der Erfindung anhand einer Zeichnung näher erläutert. Darin zeigen jeweils schematisch:
- Fig. 1: ein Flussdiagramm eines Verfahrens zum Training einer Sprechererkennungseinheit eines Hörgeräts,
- Fig. 2: ein Hörgerät und ein Kommunikationsgerät,
- Fig. 3: ein Ferngespräch zwischen einem Nutzer und einem Gesprächspartner,
- Fig. 4: den Nutzer und den Gesprächspartner aus Fig. 2 in einer echten Gesprächsumgebung.

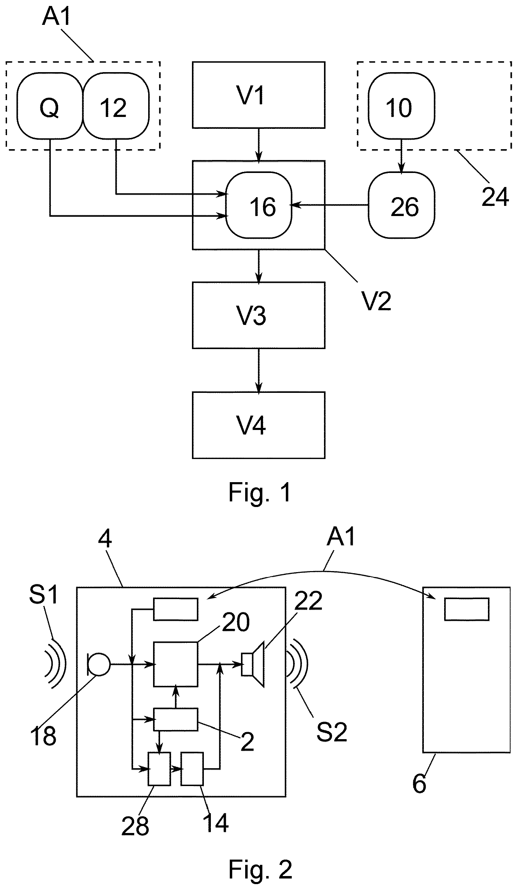

In Fig. 1 ist ein beispielhaftes Verfahren zum Training einer Sprechererkennungseinheit 2 eines Hörgeräts 4 eines Nutzers N gezeigt. Das Training erfolgt im Betrieb des Hörgeräts 4, d.h. beim bestimmungsgemäßen Gebrauch durch den Nutzer N. Das Training ist insofern auch ein Teil eines Verfahrens zum Betrieb des Hörgeräts 4.

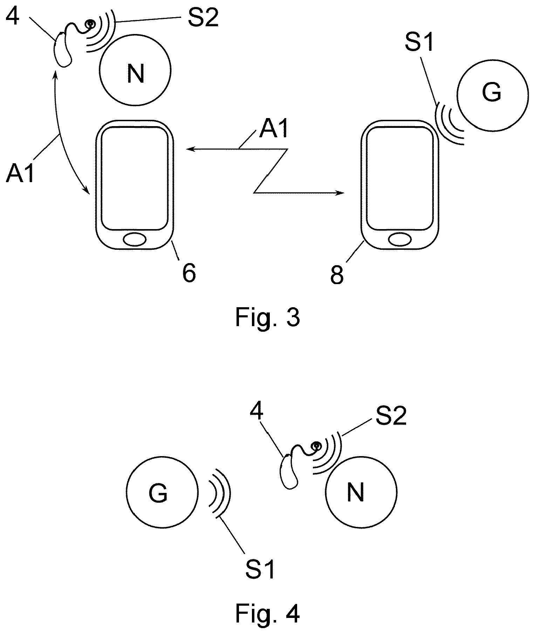

Das Hörgerät 4 ist mit einem (ersten) Kommunikationsgerät 6 des Nutzers N verbunden, zur Durchführung eines Ferngesprächs zwischen dem Nutzer N und einem Gesprächspartner G des Nutzers N. Das Hörgerät 4 und das Kommunikationsgerät 6 sind beides persönliche Geräte desselben Nutzers N, ein Ausführungsbeispiel für diese beiden Geräte ist in Fig. 2 gezeigt. Unter "Ferngespräch" wird vorliegend verstanden, dass Schallsignale S1 des Gesprächspartners G das Hörgerät 4 und den Nutzer N nicht direkt erreichen, sondern dass eine Umwandlung in ein Audiosignal A1 (d.h. ein elektrisches Signal, welches Audiodaten enthält) zwecks Übertragung und eine anschließende Rückwandlung in ein Schallsignal S2 für den Nutzer N erforderlich sind. Dies ist beispielhaft in Fig. 3 illustriert, das Ferngespräch ist dort ein Telefonat und das Kommunikationsgerät 6 ist ein Telefon. Auf Seiten des Gesprächspartners G ist in Fig. 3 ebenfalls ein (zweites) Kommunikationsgerät 8 vorhanden, die Ausführungen zum Kommunikationsgerät 6 des Nutzers N gelten entsprechend. Die beiden Kommunikationsgeräte 6, 8 müssen dabei nicht zwingend gleichartig ausgebildet sein. In dem hier gezeigten Ausführungsbeispiel sind das Hörgerät 4 und das erste Kommunikationsgerät 6 zwei separate Geräte, welche auch unabhängig voneinander nutzbar und funktionsfähig sind. Geeignet ist aber auch eine nicht explizit gezeigte Ausgestaltung, bei welcher das erste Kommunikationsgerät 6 in das Hörgerät 4 integriert ist.

Im Rahmen des Verfahrens wird in einem ersten Schritt V1 das Audiosignal A1 des Gesprächspartners G von dem Kommunikationsgerät 6 empfangen, zur Ausgabe an den Nutzer N. Das Ferngespräch wird demnach in Fig. 3 dadurch realisiert, dass mit dem zweiten Kommunikationsgerät 8 des Gesprächspartners G ein Schallsignal, speziell mit Sprache des Gesprächspartners G, aufgenommen wird und in ein Audiosignal A1 umgewandelt wird, welches dann an das erste Kommunikationsgerät 6 des Nutzers N übertragen wird. Auf Seiten des Nutzers N erfolgt die Ausgabe des Audiosignals A1 in Fig. 3 mittels des Hörgeräts 4, d.h. das erste Kommunikationsgerät 6 übermittelt das Audiosignal A1 an das Hörgerät 4 und dieses wandelt das Audiosignal A1 in ein Schallsignal S2 um, zur Ausgabe an den Nutzer N. Unter "Audiosignal" wird allgemein ein elektrisches Signal verstanden, welches Audiodaten enthält. Das Audiosignal A1 wird zu dem ersten Kommunikationsgerät 6 beispielsweise über ein Telekommunikationsnetzwerk übertragen. Die Übertragung des Audiosignals A1 vom Kommunikationsgerät 6 zum Hörgerät 4 erfolgt in Fig. 3 drahtlos, z.B. über eine Bluetooth-Verbindung.

Zusätzlich wird in einem zweiten Schritt V2 dem Gesprächspartner G eine Sprecher-ID 10 zugeordnet. Mit anderen Worten: der Gesprächspartner G wird identifiziert. Die Sprecher-ID 10 ist beispielsweise einfach ein Name des Gesprächspartners G, ebenfalls geeignet ist aber auch ein Pseudonym oder eine einfache Zahl oder Zeichenkette. Die Sprecher-ID 10 ist dem Gesprächspartner G eindeutig zugeordnet.

Aus dem Audiosignal A1 wird in einem dritten Schritt V3 eine Anzahl an Sprachsamples 12 des Gesprächspartners G extrahiert. Unter "eine Anzahl" wird allgemein "wenigstens ein" verstanden. Typischerweise werden mehrere Sprachsamples 12 extrahiert. Die Sprachsamples 12 werden beispielsweise extrahiert, indem zunächst im Audiosignal A1 mittels einer Spracherkennungseinheit 14 solche Signalabschnitte erkannt werden, welche Sprache enthalten, und indem anschließend diese Signalabschnitte als Sprachsamples 12 gespeichert werden. Die Sprachsamples 12 werden dann noch der Sprecher-ID 10 zugeordnet und bilden gemeinsam mit dieser einen Trainingsdatensatz 16.

Mit diesem Trainingsdatensatz 16 wird nun in einem vierten Schritt V4 die Sprechererkennungseinheit 10 des Hörgeräts 4 trainiert, um zukünftig den Gesprächspartner G wiederzuerkennen. Die auf diese Weise trainierte Sprechererkennungseinheit 10 ist nun ausgebildet, den Gesprächspartner G in einer echten Gesprächsumgebung wie beispielhaft in Fig. 4 gezeigt zu erkennen. In einer solchen echten Gesprächsumgebung ist der Gesprächspartner G in der Nähe des Nutzers N und die Sprache des Gesprächspartners G, d.h. das Schallsignal S1, erreicht den Nutzer N nicht über das Kommunikationsgerät 6, sondern wird direkt mit dem Hörgerät 4 aufgenommen und wiedergegeben. Eine solche echte Gesprächsumgebung ergibt sich z.B. bei einem Gespräch von Angesicht zu Angesicht. Der Gesprächspartner G, mit dessen Sprachsamples 12 und Sprecher-ID 10 die Sprechererkennungseinheit 2 wie beschrieben trainiert wurde, ist dann ein antrainierter Gesprächspartner G, auch als bekannter oder erkennbarer Gesprächspartner G bezeichnet.

Das Hörgerät 4 weist in Fig. 2 einen Eingangswandler 18, eine Signalverarbeitung 20 und einen Ausgangswandler 22 auf. Der Eingangswandler 18 ist hier ein Mikrofon, der Ausgangswandler 22 ist hier ein Hörer. Das Hörgerät 4 ist einem einzelnen Nutzer N zugeordnet und wird lediglich von diesem verwendet und ist auf diesen individuell abgestimmt. Das Hörgerät 4 dient zum Ausgleich eines Hörverlusts des Nutzers N. Der Eingangswandler 18 erzeugt aus dem Schallsignal S1 ein Eingangssignal, welches der Signalverarbeitung 20 zugeführt wird. Die Signalverarbeitung 20 modifiziert das Eingangssignal und erzeugt dadurch ein Ausgangssignal, welches somit ein modifiziertes Eingangssignal ist. Zum Ausgleich eines Hörverlusts wird das Eingangssignal beispielsweise gemäß einem Audiogramm des Nutzers N mit einem frequenzabhängigen Verstärkungsfaktor verstärkt. Das Ausgangssignal wird schließlich mittels des Ausgangswandlers 22 an den Nutzer N ausgegeben, nämlich als Schallsignal S2.

Die Sprechererkennungseinheit 2 dient zur Erkennung eines Sprechers ("speaker recognition"), vorliegend speziell zur Wiedererkennung des Gesprächspartners G des Nutzers N. Bei der Sprechererkennung wird ein Sprecher anhand von dessen Sprache identifiziert. Dabei meint der Begriff "Sprache" diejenigen Schallsignale S1, welche von einer Person beim Sprechen ausgegeben werden. Eine Sprechererkennung ist möglich, da jede Person eine individuelle Aussprache hat, sodass deren Sprache charakteristische Merkmale aufweist, mittels welcher die Sprache dieser Person von der Sprache einer anderen Person unterscheidbar ist. Eine solche Prüfung und Unterscheidung mit dem Ergebnis einer Erkennung eines bestimmten Sprechers erfolgt vorliegend mit der Sprechererkennungseinheit 2. Diese weist hierzu beispielsweise einen Klassifikator auf, welcher ein gegebenes Audiosignal A1 nach bestimmten Merkmalen absucht, welche die Sprache eines jeweiligen Gesprächspartners G charakterisieren. Sind die Merkmale der Sprache eines antrainierten Gesprächspartners G im Audiosignal A1 enthalten, wird dieser Gesprächspartner G erkannt. Wie der Gesprächspartner G dann bezeichnet wird, ist grundsätzlich beliebig, wichtig ist zunächst nur, dass erkannt wird, dass ein bestimmter Gesprächspartner G spricht, sodass anhängig hiervon geeignete Maßnahmen ergriffen werden können. Solche Maßnahmen sind beispielsweise eine optimierte Einstellung des Hörgeräts 4 oder eine Anpassung der Modifikation durch die Signalverarbeitung 20, z.B. um den Gesprächspartner G für den Nutzer N besser hörbar zu machen.

Das hier beschriebene Training für die Sprechererkennungseinheit 2 erfordert kein aktives Eingreifen des Nutzers N, sondern erfolgt rein passiv. Die beschriebene Extraktion von Sprachsamples 12 während eines Ferngesprächs gelöst erfolgt vollständig passiv, eine spezielle Aktion oder Kooperation des Gesprächspartners G oder des Nutzers N und auch eine spezielle Umgebung und Prozedur für das Training sind nicht erforderlich. Die Sprechererkennungseinheit 2 wird vielmehr im regulären Betrieb des Hörgeräts 4 automatisch trainiert, sozusagen im Hintergrund.

Für das Training der Sprechererkennungseinheit 2 ist die Zuordnung des Gesprächspartners G zu den Sprachsamples 12 von Bedeutung, da dies die zukünftige Erkennung des Gesprächspartners G anhand von dessen Sprache überhaupt erst ermöglicht. Vorliegend wird hierzu die Sprecher-ID 10 verwendet. Wenn dann zukünftig ein Audiosignal A1 von der Sprechererkennungseinheit 2 analysiert wird, wird von dieser entsprechend die zugehörige Sprecher-ID 10 zurückgegeben.

Zur Bestimmung der Sprecher-ID 10 wird im hier gezeigten Ausführungsbeispiel der Fig. 1 ausgenutzt, dass bei einem Ferngespräch typischerweise bereits eine Sprecher-ID 10 für den Gesprächspartner G vorhanden ist, welche zunächst einmal genutzt wird, um das Ferngespräch überhaupt herzustellen. Die Sprecher-ID 10 wird entsprechend mittels eines Kontaktverzeichnisses 24 bestimmt, in welchem für eine Anzahl an möglichen Gesprächspartnern G jeweils eine Sprecher-ID 10 und eine Kontaktinformation zur Herstellung eines Ferngesprächs gespeichert sind. Das Kontaktverzeichnis 24 ist hier exemplarisch ein Telefonbuch, welches auf dem Kommunikationsgerät 6 gespeichert ist. Mit dem Kontaktverzeichnis 24 ist es dem Nutzer N möglich, einen Gesprächspartner G auszuwählen und mit diesem ein Ferngespräch herzustellen (oder umgekehrt wird der Nutzer N vom Gesprächspartner G kontaktiert). Entsprechend ist dann für dieses Ferngespräch der Gesprächspartner G automatisch bekannt und anhand der Sprecher-ID 10 auch eindeutig identifizierbar. Daher wird diese Sprecher-ID 10 dann den Sprachsamples 12 zugeordnet, welche während des Ferngesprächs extrahiert werden. Auf diese Weise wird den Sprachsamples 12 automatisch der korrekte Gesprächspartner G zugeordnet.

Zweckmäßig ist auch ein selektives Training nur für bestimmte Gesprächspartner G, z.B. solche, welche vom Nutzer N vorab ausgewählt werden. In Fig. 1 ist hierfür eine Liste 26 bereitgestellt, welche eine Anzahl von Sprecher-IDs 10 enthält, für welche die Sprechererkennungseinheit 2 trainiert werden soll. Die Liste 26 unterscheidet sich von dem bereits genannten Kontaktverzeichnis 24. Beispielsweise sind im Kontaktverzeichnis 24 einzelne Gesprächspartner G und/oder Gruppen von Gesprächspartnern G auswählbar, für welche die Sprechererkennungseinheit 2 trainiert werden soll und welche dann die Liste 26 bilden. Die Sprechererkennungseinheit 2 wird nun lediglich dann trainiert, wenn die Sprecher-ID 10 des Gesprächspartners G im aktuellen Ferngespräch in der Liste 26 enthalten ist. Auf diese Weise erfolgt ein Training nur für vorselektierte Personen und/oder Gruppen. Die Liste 26 ist z.B. auf dem Hörgerät 4 oder dem Kommunikationsgerät 5 gespeichert. Die Liste kann auch in das Kontaktverzeichnis 24 integriert sein.

Die Qualität der Sprachsamples 12 ist bei heutigen Technologien für Ferngespräche typischerweise ausreichend für ein erfolgreiches Training der Sprechererkennungseinheit 2. Nichtsdestoweniger ist es zweckmäßig, die Qualität der Sprachsamples 12 zu bestimmen und gegebenenfalls solche Sprachsamples 12, welche hinsichtlich der Qualität eine Mindestanforderung nicht erfüllen, zu verwerfen, d.h. nicht zum Training der Sprechererkennungseinheit 2 zu verwenden. In einer geeigneten Ausgestaltung hierfür wird ein Qualitätsparameter Q (d.h. allgemein die Qualität) des Ferngesprächs bestimmt und somit automatisch auch die Qualität möglicher Sprachsamples 12, welche extrahierbar sind. Die Sprechererkennungseinheit 2 wird nun lediglich dann trainiert, wenn der Qualitätsparameter Q einen vorgegebenen Grenzwert überschreitet (je nach Ausgestaltung nach oben oder nach unten). Der Qualitätsparameter Q ist beispielsweise eine Bandbreite des Audiosignals A1, welches zum Kommunikationsgerät 6 übertragen wird. Möglich ist auch, dass zuerst die Sprachsamples 12 extrahiert werden und dann anhand dieser der Qualitätsparameter Q bestimmt wird, gegebenenfalls sogar separat für jedes einzelne Sprachsample 12.

Wie bereits im Zusammenhang mit Fig. 2 beschrieben, weist das Hörgerät 4 ein Mikrofon auf. Das Hörgerät 4 ist dann weiter dazu ausgebildet, den Gesprächspartner G auch dann wiederzuerkennen, wenn dessen Sprache direkt von dem Mikrofon aufgenommen wird, d.h. bei einem Gespräch von Angesicht zu Angesicht z.B. wie in Fig. 4 gezeigt, im Gegensatz zu einem Ferngespräch wie in Fig. 3 gezeigt. Ein Schallsignal S1, welches Sprache des Gesprächspartners G enthält, wird vom Mikrofon aufgenommen und in ein Eingangssignal umgewandelt. Das Eingangssignal des Mikrofons ist ein Audiosignal, welches wie das Audiosignal A1 beim Ferngespräch einer Analyse durch die Sprechererkennungseinheit 2 zugänglich ist. Entsprechend wird das Eingangssignal der Sprechererkennungseinheit 2 zugeführt und von dieser analysiert. Sofern der aktuelle Gesprächspartner G einem antrainierten Gesprächspartner G entspricht, wird dieser von der Sprechererkennungseinheit 2 auch erkannt. Das Eingangssignal wird auch wie bereits beschrieben der Signalverarbeitungseinheit 20 zugeführt, um ein Ausgangssignal zu erzeugen.

Für das Ferngespräch ist das hier gezeigte Hörgerät 4 ausgebildet, als Headset verwendet zu werden, d.h. als akustisches Ein- und Ausgabegerät für das Kommunikationsgerät 6 des Nutzers N. Hierfür weist das Hörgerät 4 einen Headset-Modus auf, in welchem das Hörgerät 4 als ein- und Ausgabegerät für Schallsignale S1, S2 verwendet wird, welche vom Hörgerät 4 in Form von Audiosignalen A1 über das Kommunikationsgerät 6 mit dem Gesprächspartner G ausgetauscht (d.h. gesendet und/oder empfangen) werden. Der Headset-Modus wird während eines Ferngesprächs aktiviert, so auch in dem in Fig. 3 gezeigten Ferngespräch. Das Kommunikationsgerät 6 dient hierbei als Relay für die Weiterleitung von Audiosignalen A1 zwischen dem Hörgerät 4 und dem Kommunikationsgerät 8. Damit ist dann insgesamt ein Headset-Modus-basiertes Training zur Sprechererkennung realisiert.

Das Hörgerät 4 allgemein und speziell die Erzeugung des Ausgangssignals mittels der Signalverarbeitungseinheit 20 werden nun sprecherabhängig gesteuert, d.h. abhängig von der Sprecher-ID 10 des aufgrund des vorangegangenen Trainings in einer nun echten Gesprächsumgebung erkannten Gesprächspartners G. Nachfolgend sind einige beispielhafte Ausgestaltungen für eine solche sprecherabhängige Anpassung des Betriebs des Hörgeräts 4 beim Wiedererkennen des Gesprächspartners G mittels der Sprechererkennungseinheit 2 beschrieben. Dabei wird vorausgesetzt, dass das Wiedererkennen in einer echten Gesprächsumgebung z.B. wie in Fig. 4 erfolgt, d.h. die Sprache des Gesprächspartners G erreicht das Hörgerät 4 direkt als Schallsignal S1 und nicht über den Umweg eines Kommunikationsgeräts 6 und in Form eines Audiosignals A1, auch wenn dies grundsätzlich möglich ist.

In einer ersten Ausgestaltung wird beim Wiedererkennen des Gesprächspartners G mittels der Sprechererkennungseinheit 2 der Betrieb des Hörgeräts 4 sprecherabhängig angepasst, indem eine Hörrichtung des Hörgeräts 4 auf den Gesprächspartner G gerichtet wird. Das Mikrofon ist dabei als Richtmikrofon ausgebildet, um Schallsignale S1 aus einer bestimmten Richtung gegenüber Schallsignalen aus anderen Richtungen hervorzuheben. Diese bestimmte Richtung wird durch eine Richtcharakteristik des Mikrofons bestimmt, welche nun derart eingestellt wird, dass diese den erkannten Gesprächspartner G gegenüber anderen Schallquellen in der Umgebung hervorhebt.

In einer zweiten Ausgestaltung wird beim Wiedererkennen des Gesprächspartners G mittels der Sprechererkennungseinheit 2 der Betrieb des Hörgeräts 4 sprecherabhängig angepasst, indem ein dem Gesprächspartner G zugeordnetes Sound-Profil oder Betriebsprogramm des Hörgeräts 4 eingestellt wird. Beispielsweise wird die Verarbeitung des Eingangssignals mittels der Signalverarbeitungseinheit 20 dadurch speziell auf den Gesprächspartner G angepasst.

In einer dritten Ausgestaltung wird beim Wiedererkennen des Gesprächspartners G mittels der Sprechererkennungseinheit 2 der Betrieb des Hörgeräts 4 sprecherabhängig angepasst, indem eine Medienwiedergabe unterbrochen wird, welche über das Hörgerät 4 erfolgt. Ähnlich zum Headset-Modus ist das Hörgerät 4 auch als bloßes Audioausgabegerät in einem Medienwiedergabemodus betreibbar. Falls dieser aktiv ist und der Gesprächspartner G erkannt wird, wird der Medienwiedergabemodus unterbrochen, damit der Nutzer N den Gesprächspartner G besser verstehen kann.

In einer vierten Ausgestaltung wird beim Wiedererkennen des Gesprächspartners G mittels der Sprechererkennungseinheit 2 der Betrieb des Hörgeräts 4 sprecherabhängig angepasst, indem ein Lautlosbetrieb des Hörgeräts 4 deaktiviert wird. Die Ausführungen und Vorteile zur dritten Ausgestaltung gelten analog.

In einer fünften Ausgestaltung wird beim Wiedererkennen des Gesprächspartners G mittels der Sprechererkennungseinheit 2 der Betrieb des Hörgeräts 4 sprecherabhängig angepasst, indem eine Vorverarbeitungseinheit 28, z.B. wie in Fig. 2 zur Spracherkennung (d.h. "speech recognition"), des Hörgeräts 4 aktiviert wird. Die Vorverarbeitungseinheit 28 realisiert eine optionale Vorverarbeitung des Eingangssignals vom Mikrofon bevor das Eingangssignal weiterverarbeitet wird. Beispielsweise weist das Hörgerät 4 eine Spracherkennungseinheit 14 auf, mittels welcher parallel und grundsätzlich unabhängig von der Signalverarbeitung 20 Sprache erkannt wird. Hierfür ist eine Vorverarbeitung vor der Spracherkennungseinheit 14 vorteilhaft, z.B. um Sprachanteile gezielt zu isolieren. Dies erfolgt mittels der Vorverarbeitungseinheit 28, deren Aktivierung jedoch nur dann erforderlich ist, wenn auch tatsächlich Sprache oder spezieller Sprache, welche auch erkannt werden soll, vorhanden ist.

### Bezugszeichenliste

- 2: Sprechererkennungseinheit
- 4: Hörgerät
- 6: (erstes) Kommunikationsgerät
- 8: (zweites) Kommunikationsgerät
- 10: Sprecher-ID
- 12: Sprachsample
- 14: Spracherkennungseinheit
- 16: Trainingsdatensatz
- 18: Eingangswandler (Mikrofon)
- 20: Signalverarbeitung
- 22: Ausgangswandler
- 24: Kontaktverzeichnis
- 26: Liste
- 28: Vorverarbeitungseinheit
- A1: Audiosignal
- G: Gesprächspartner
- N: Nutzer
- S1: Schallsignal
- S2: Schallsignal
- Q: Qualitätsparameter
- V1: erster Schritt
- V2: zweiter Schritt
- V3: dritter Schritt
- V4: vierter Schritt

## Patentansprüche

1. Verfahren zum Training einer Sprechererkennungseinheit (2) eines Hörgeräts (4) eines Nutzers (N),
- wobei das Hörgerät (4) mit einem Kommunikationsgerät (6) des Nutzers (N) verbunden ist, zur Durchführung eines Ferngesprächs zwischen dem Nutzer (B) des Hörgeräts (4) und einem Gesprächspartner (G) des Nutzers (N),
- wobei ein Audiosignal (A1) des Gesprächspartners (G) von dem Kommunikationsgerät (6) empfangen wird, zur Ausgabe an den Nutzer (N),
- wobei dem Gesprächspartner (G) eine Sprecher-ID (10) zugeordnet wird,
- wobei aus dem Audiosignal (A1) eine Anzahl an Sprachsamples (12) des Gesprächspartners (G) extrahiert wird,
- wobei die Sprachsamples (12) der Sprecher-ID (10) zugeordnet werden und gemeinsam mit dieser einen Trainingsdatensatz (16) bilden,
- wobei die Sprechererkennungseinheit (2) des Hörgeräts (4) mit dem Trainingsdatensatz (16) trainiert wird, um zukünftig den Gesprächspartner (G) wiederzuerkennen,
- wobei die Sprecher-ID (10) mittels eines Kontaktverzeichnisses (24) bestimmt wird, in welchem für eine Anzahl an möglichen Gesprächspartnern (G) jeweils eine Sprecher-ID (10) und eine Kontaktinformation zur Herstellung eines Ferngesprächs gespeichert sind.

2. Verfahren nach Anspruch 1,
wobei eine Liste (26) bereitgestellt ist, welche eine Anzahl von Sprecher-IDs (10) enthält, für welche die Sprechererkennungseinheit (2) trainiert werden soll,
wobei die Sprechererkennungseinheit (2) lediglich dann trainiert wird, wenn die Sprecher-ID (10) in der Liste (26) enthalten ist.

3. Verfahren nach Anspruch 1 oder 2,
wobei ein Qualitätsparameter (Q) des Ferngesprächs bestimmt wird,
wobei die Sprechererkennungseinheit (2) lediglich dann trainiert wird, wenn der Qualitätsparameter (Q) einen vorgegebenen Grenzwert überschreitet.

4. Verfahren nach einem der Ansprüche 1 bis 3,
wobei das Hörgerät (4) ein Mikrofon aufweist und ausgebildet ist, den Gesprächspartner (G) auch dann wiederzuerkennen, wenn dessen Sprache direkt von dem Mikrofon aufgenommen wird.

5. Verfahren nach einem der Ansprüche 1 bis 4,
wobei das Hörgerät (4) einen Headset-Modus aufweist, in welchem das Hörgerät (4) als ein Ein- und Ausgabegerät für Schallsignale (S1) verwendet wird, welche vom Hörgerät (4) in Form von Audiosignalen (A1) über das Kommunikationsgerät (6) mit dem Gesprächspartner (G) ausgetauscht werden.

6. Verfahren nach einem der Ansprüche 1 bis 5,
wobei beim Wiedererkennen des Gesprächspartners (G) mittels der Sprechererkennungseinheit (2) der Betrieb des Hörgeräts (4) sprecherabhängig angepasst wird, indem eine Hörrichtung des Hörgeräts (4) auf den Gesprächspartner (G) gerichtet wird.

7. Verfahren nach einem der Ansprüche 1 bis 6,
wobei beim Wiedererkennen des Gesprächspartners (G) mittels der Sprechererkennungseinheit (2) der Betrieb des Hörgeräts (4) sprecherabhängig angepasst wird, indem ein dem Gesprächspartner (G) zugeordnetes Sound-Profil oder Betriebsprogramm des Hörgeräts (4) eingestellt wird.

8. Verfahren nach einem der Ansprüche 1 bis 7,
wobei beim Wiedererkennen des Gesprächspartners (G) mittels der Sprechererkennungseinheit (2) der Betrieb des Hörgeräts (4) sprecherabhängig angepasst wird, indem eine Medienwiedergabe unterbrochen wird, welche über das Hörgerät (4) erfolgt

9. Verfahren nach einem der Ansprüche 1 bis 8,
wobei beim Wiedererkennen des Gesprächspartners (G) mittels der Sprechererkennungseinheit (2) der Betrieb des Hörgeräts (4) sprecherabhängig angepasst wird, indem ein Lautlosbetrieb des Hörgeräts (4) deaktiviert wird.

10. Verfahren nach einem der Ansprüche 1 bis 9,
wobei beim Wiedererkennen des Gesprächspartners (G) mittels der Sprechererkennungseinheit (2) der Betrieb des Hörgeräts (4) sprecherabhängig angepasst wird, indem eine Vorverarbeitungseinheit (28), insbesondere zur Spracherkennung, des Hörgeräts (4) aktiviert wird.

11. Hörgerät (4) und Kommunikationsgerät (6), welche in Kombination ausgebildet sind zur Durchführung eines Verfahrens gemäß einem der Ansprüche 1 bis 10.
